# EUROPÄISCHE PATENTSCHRIFT

(11) **EP 0 711 638 B1**
(45) Veröffentlichungstag und Bekanntmachung des Hinweises auf die Patenterteilung: **25.11.1998**
(21) Anmeldenummer: 95202738.1
(22) Anmeldetag: 11.10.1995
(51) Int. Cl.: B27B 5/22, B23Q 5/58, B23Q 16/00

(54) **Werkstück-Vorschubwagen einer Werkzeugmaschine, insbesondere einer Kreissäge**
Workpiece feed carriage for a machine tool, in particular a circular saw
Chariot d'alimentation de pièces pour une machine-outil, en particulier une scie circulaire

(30) Priorität: 13.10.1994 DE 9416468 U
(43) Veröffentlichungstag der Anmeldung: 15.05.1996
(73) Patentinhaber: Wilhelm Altendorf GmbH & Co. KG, D-32429 Minden (DE)
(72) Erfinder: Thiele, Siegfried, Dipl.-Ing., D-32429 Minden (DE); Nickel, Heinrich, D-32469 Petershagen (DE)
(74) Vertreter: Eisenführ, Speiser & Partner

(56) Entgegenhaltungen:
- DE-U- 9 003 918

## Beschreibung

Die Erfindung betrifft einen Werkstück-Vorschubwagen einer Werkzeugmaschine, insbesondere einer Kreissäge, der einen ortsfesten Unterwagen und einen diesem gegenüber linear beweglichen Oberwagen aufweist, von denen einer der beiden Wagen einen Anschlag und der jeweils andere Wagen einen mit dem Anschlag zusammenwirkenden Riegel aufweist, wobei der Riegel mittels eines Betätigungsorgans gegen eine Rückstellkraft aus einer die Relativbewegung der Wagen an einer Grenzstellung durch Anlegen am Anschlag begrenzenden Riegelstellung in eine ihn am Anschlag vorbeilaufen lassende Freigabestellung bewegbar ist.

Derartige Rollwagen, mit denen sich das zu bearbeitende Werkstück parallel zur Werkzeugebene - also etwa der Ebene eines Kreissägeblatts - an diesem vorbei vorschieben läßt, sind allgemein bekannt und haben sich in der Praxis bewährt. Um im Einsatz solcher Werkzeugmaschinen Unfälle zu vermeiden, schreiben europäische Normen vor, daß der Vorschubweg des Rollwagens derart begrenzt wird, daß er jedenfalls mit seinem in Vorschubrichtung hinteren Ende nicht über die Mitte des Sägeblattes hinausbewegt werden kann. Das schränkt zwar einen ungewollten Kontakt der Bedienungsperson mit dem Werkzeug ein, erschwert aber den Zugang zum Werkzeug, wenn dieses gewechselt werden soll. Das gilt in besonderem Maße für das Sägeblatt einer Kreissäge, weil der für das Werkzeug zur Verfügung stehende Raum zwischen der feststehenden Tischplatte und dem Rollwagen nur sehr gering ist.

Es ist deshalb erforderlich, den Rollwagen weiter am Werkzeug vorbeibewegen zu können, um dieses gänzlich freizulegen und so den Werkzeugwechsel zu ermöglichen.

Der Erfindung liegt die Aufgabe zugrunde, das sich hieraus ergebende Problem zu lösen, einerseits im Betrieb die Bewegung des Werkstück-Vorschubwagens sicher zu begrenzen, andererseits aber für Arbeiten am Werkzeug die Begrenzung auf einfache Weise aufheben zu können.

Diese Aufgabe wird erfindungsgemäß dadurch gelöst, daß an dem den Anschlag tragenden Wagen ein Abweiser angeordnet ist, der den Riegel nach Überfahren des Anschlags in seiner Freigabestellung hält oder ihn bei Annäherung an den Anschlag in seine Freigabestellung bewegt, wenn der Vorschubwagen aus einer Stellung jenseits seiner Grenzstellung auf diese zu bewegt wird. Dabei gewährleistet die Rückstellkraft die sichere Begrenzung der Vorschubbewegung, sie kann jedoch durch positive Betätigung der Riegelbewegung aufgehoben werden, um den Vorschubwagen über die Grenzstellung hinaus zu bewegen. Befindet sich der Vorschubwagen anschließend jenseits seiner Grenzstellung und soll wieder zurück in den begrenzten Arbeitsbereich bewegt werden, muß der Riegel hingegen nicht betätigt werden: Der Abweiser hält den Riegel, solange sich der Vorschubwagen jenseits der Grenzstellung befindet, in seiner Freigabestellung oder - falls der Abweiser beispielsweise geneigt und als Rampe ausgebildet ist - er bewegt den Riegel bei Annäherung an den Anschlag in seine Freigabestellung. Es bedarf jedenfalls aufgrund des Abweisers - außer zum Entriegeln - keiner weiteren Betätigung des Riegels. Dieser schwenkt unter Einfluß der Rückstellkraft automatisch in seine Riegelstellung zurück, wenn der Vorschubwagen so weit zurückbewegt wird, daß der Riegel den Anschlag (in der Gegenrichtung) passiert.

Ferner ist vorzugsweise ein in Verbindung mit dem Schwenken des Riegels in seine Freigabestellung betätigter Schalter vorgesehen, der den Stromkreis für den Werkzeugantrieb unterbricht, solange sich der Riegel in seiner Freigabestellung befindet und deshalb zumindest die Gefahr besteht, daß das Werkzeug zur Gänze freigelegt wird.

Die derzeit üblichen Rollwagen haben zumeist einen zwischen Unter- und Oberwagen angeordneten, beiden gegenüber relativbeweglichen Mittelwagen, der sich mit der halben Relativbewegung des Ober- zum Unterwagen gegenüber den beiden anderen Wagen bewegt. In diesem Fall ist erfindungsgemäß vorgesehen, daß am Ober- und Unterwagen je ein Anschlag vorgesehen ist und der Mittelwagen den Riegel trägt, der in seiner Freigabestellung an beiden Anschlägen vorbeiläuft. Auf diese Weise wird die Sicherheit der Verriegelung noch erhöht.

Weitere vorteilhafte Weiterbildungen sind den zusätzlichen Unter-ansprüchen zu entnehmen.

Die Zeichnung veranschaulicht eine Ausführungsform der Erfindung, darin zeigt:
- Fig. 1: einen teilweisen Längsschnitt durch den Doppelrollwagen einer Formatkreissäge mit der erfindungsgemäßen Vorschub-Begrenzungseinrichtung im Riegelzustand;
- Fig. 2: einen gleichartigen Längsschnitt mit der Begrenzungs--einrichtung in der Freigabestellung;

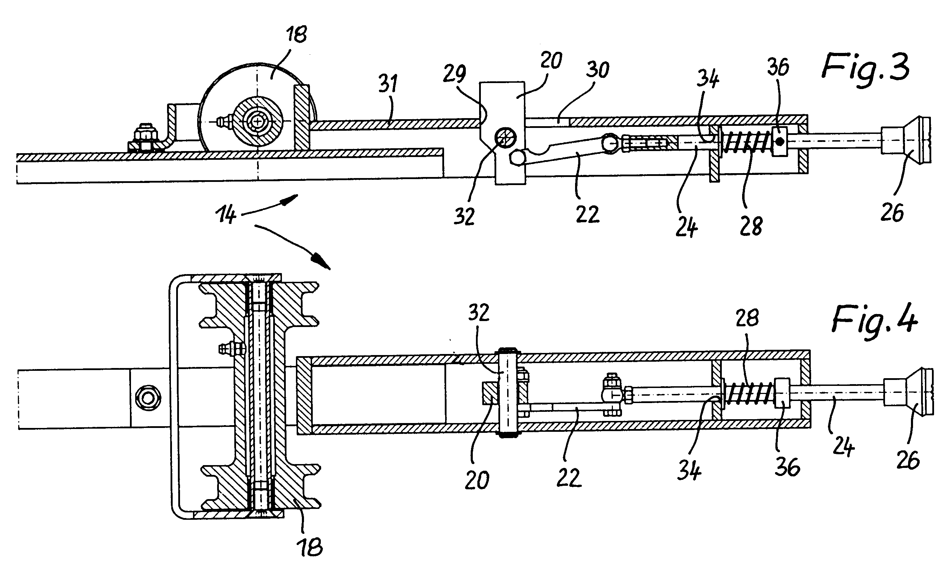

- Fig. 3: eine der Fig. 1 entsprechende Teildarstellung nur des Schwenkriegels und seiner Betätigung am Ende des Mittelwagens;
- Fig. 4: eine teilweise geschnittene Draufsicht auf das in Fig. 3 Dargestellte;

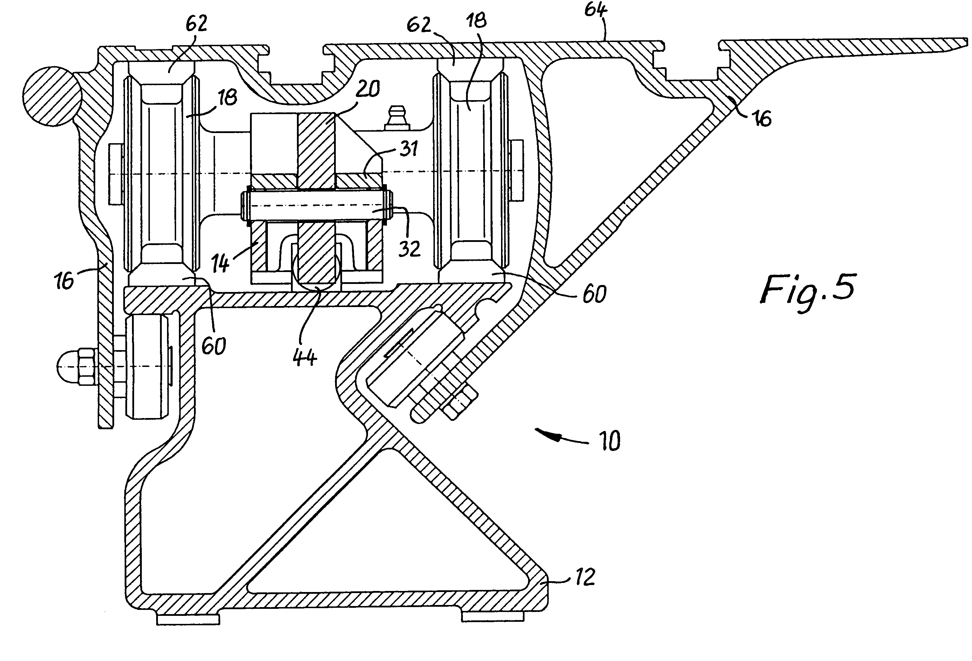

- Fig. 5: einen Schnitt durch den Doppelrollwagen gemäß der Linie V-V in Fig. 1; und

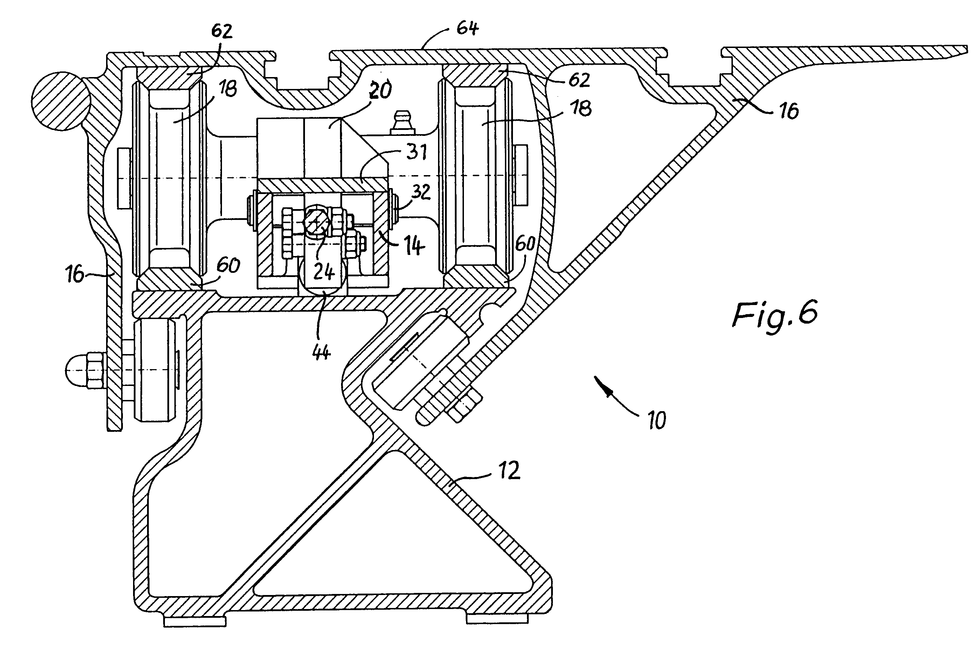

- Fig. 6: einen Schnitt gemäß der Linie VI-VI in Fig. 1.

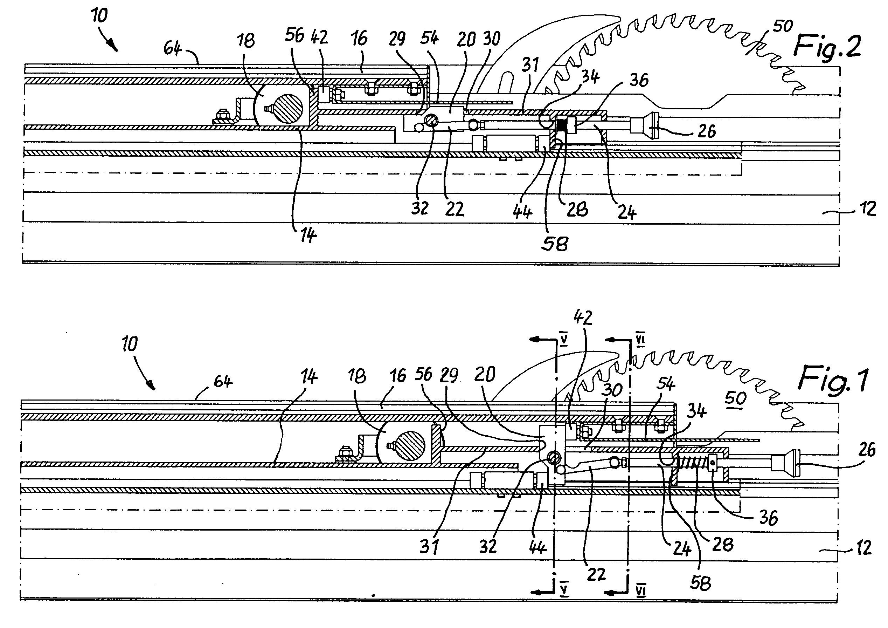

In Fig. 1 sind im Längsschnitt die wesentlichen Elemente eines Doppelrollwagens 10 einer Kreissäge zu erkennen, nämlich ein fest mit dem (nicht dargestellten) Maschinengestell verbundener Unterwagen 12, ein Mittelwagen 14 und ein Oberwagen 16. Am Mittelwagen 14 sind mehrere Rollen 18 befestigt, die einerseits mit Schienen 60 des Unterwagens 12, andererseits Schienen 62 des Oberwagens in Eingriff stehen. Die Oberfläche 64 des Oberwagens 16 dient der Werkstückauflage. Wenn beim Sägen der Oberwagen 16 mit dem Werkstück bewegt wird, rollt er auf den Rollen 18, und da die Achsen der Rollen 18 am Mittelwagen 14 gelagert sind, bewegt sich der Mittelwagen 14 bei einer Bewegung des Oberwagens 16 mit der Hälfte von dessen Geschwindigkeit über den Unterwagen 12 hinweg.

Die beweglichen Elemente der entriegelbaren Vorschubbegrenzung des Oberwagens 16, nämlich ein Riegel 20 sowie dessen Antrieb bestehend aus einer Koppel 22, einer Stange 24 mit einem Betätigungsgriff 26 und einer Feder 28 sind miteinander bzw. mit dem Mittelwagen 14 verbunden. Der Riegel 20 kann um einen am Mittelwagen 14 befestigten Bolzen 32 um ungefähr 90° schwenken. In seiner in Fig. 1 gezeigten Riegelstellung liegt er oberhalb des Bolzens 32 an einem Widerlager 29 in Form einer Seitenbegrenzung der Öffnung 30 in einem Wandungsabschnitt 31 des Mittelwagens 14 an.

Unterhalb seiner vom Bolzen 32 gebildeten Schwenkachse ist ein Ende der Koppel 22 an dem Riegel 20 angelenkt. Das andere Ende der Koppel 22 ist mit einem Ende der Stange 24 schwenkbar verbunden. Diese Stange 24 ist in einer Längsführung im Mittelwagen 14 gelagert. An ihrem freien Ende befindet sich der Betätigungsgriff 26. In ihrem mittleren Bereich ist die Stange 24 von der Druckfeder 28 umgeben, welche sich auf ihrer einen Seite an einem ersten Führungsauge 34 des Mittelwagens 14 und an ihrem anderen Ende an einem auf der Stange 26 befestigten Stellring 36 abstützt, so daß die als Rückstellglied wirkende Feder 28 den Riegel 20 im unbetätigten Zustand gegen das Widerlager 29 drückt. Wird der Oberwagen bis in die in Fig. 1 gezeigte Grenzstellung vorgeschoben, dann liegt der Riegel 20 außerdem an einem Anschlag 42 am Oberwagen 16 sowie an einem unteren Anschlag 44 am Unterwagen 12 des Doppelrollwagens 10 an.

Um die entriegelbare Vorschubbegrenzung von der in Fig. 1 gezeigten verriegelten Normalposition in die in Fig. 2 gezeigte entriegelte Position zu bringen, muß der Oberwagen 16 gegenüber der in Fig. 1 abgebildeten Grenzstellung in bezug auf die Zeichnung etwas nach rechts bewegt werden, was zur Folge hat, daß sich gleichzeitig der Mittelwagen 14 um den halben Weg des Oberwagens 16 nach rechts bewegt, so daß die beiden Anschläge 42, 44 nicht mehr an dem Riegel 20 anliegen. Somit kann der Riegel 20 durch Drücken des Betätigungsgriffs 26 eine viertel Rechtsdrehung ausführen und dadurch flachgelegt werden. Um das abgebildete Ende des Oberwagens 16 bezüglich der Zeichnung links über die Mitte des Sägeblattes 50 hinauszubewegen, muß der Betätigungsgriff 26 so lange gedrückt werden, bis dieses Ende die Mitte des Sägeblattes 50 passiert hat.

Es stellt sich dann die in Fig. 2 abgebildete Situation ein. Der Riegel 20 liegt flach und ragt nicht in die Bahn der beiden Anschläge 42 und 44. Damit der Riegel 20 seine flachliegende Position auch dann beibehält, wenn - entgegen der Druckfeder 28 - kein anhaltender Druck auf den Betätigungsgriff 26 ausgeübt wird, ist am Oberwagen als Abweiser ein Blech 54 vorgesehen, das den Riegel 20 am Aufrichten hindert. Das Blech 54 kann auch derart geneigt angeordnet sein, daß es als Rampe wirkt und den Riegel automatisch flachlegt, wenn der Mittelwagen 14 aus einer Position jenseits der Grenzstellung quasi "von hinten" auf die Anschläge 42, 44 zu bewegt wird.

Aufgrund des Abweisers (Blech 54) braucht der Riegel 20 zum Zurückbewegen des Vorschubwagens aus der freigegebenen Stellung in den begrenzten Arbeitsbereich nicht betätigt zu werden. Sobald der Riegel 20 beim Zurückbewegen die Anschläge 42, 44 passiert hat, wird er von der Feder 28 aufgerichtet und schnappt in seine Riegelstellung.

In der in Fig. 2 dargestellten Position liegen der obere Anschlag 42 und der untere Anschlag 44 an jeweils einem festen Endanschlag am Mittelwagen an. Der obere Endanschlag 56 befindet sich in der Nähe der Rolle 18, während sich der untere Endanschlag 58 in unmittelbarer Nähe des Führungsauges 34 befindet. Die beiden Endanschläge 56 und 58 stellen sicher, daß der Rollwagen in bezug auf die Zeichnung nur so weit nach links verschoben wird, daß ein freier Zugang zum Sägeblatt 50 gewährleistet ist und der Rollwagen gleichzeitig in den Schienen des Unterwagens und des Oberwagens sicher geführt bleibt. Nicht abgebildet ist ein Mikroschalter, der von dem Oberwagen 16 betätigt wird, sobald dessen Ende die Mitte des Sägeblattes 50 passiert hat.

Durch Betätigen des Mikroschalters wird die Stromzufuhr für den Sägeblattantrieb unterbrochen, so daß dieser keinesfalls unbeabsichtigt in Betrieb genommen werden kann. Erst wenn sich das abgebildete Ende des Oberwagens 16 wieder mit Bezug auf die Zeichnung rechts der Mitte des Sägeblattes 50 befindet, wird der Mikroschalter wieder freigegeben. Gleichzeitig richtet sich der Riegel 20 infolge des Momentes, das die Druckfeder 28 über die Stange 24 und die Koppel 22 auf ihn ausübt, automatisch wieder auf, so daß er wie in Fig. 1 ab-gebildet in die Bahn der beiden Anschläge 42 und 44 ragt. Infolgedessen ist der Weg des abgebildeten Endes des Oberwagens 16 wie gewünscht auf den mit Bezug auf die Zeichnung rechts von der Sägeblattmitte befindlichen Bereich begrenzt, solange der Betätigungsgriff 26 nicht drückt wird.

## Patentansprüche

1. Werkstück-Vorschubwagen einer Werkzeugmaschine, insbesondere einer Kreissäge, der einen ortsfesten Unterwagen und einen diesem gegenüber linear beweglichen Oberwagen aufweist, von denen einer der beiden Wagen einen Anschlag und der jeweils andere Wagen einen mit dem Anschlag zusammenwirkenden Riegel aufweist, wobei der Riegel mittels eines Betätigungsorgans gegen eine Rückstellkraft aus einer die Relativbewegung der Wagen an einer Grenzstellung durch Anlegen am Anschlag begrenzenden Riegelstellung in eine ihn am Anschlag vorbeilaufen lassende Freigabestellung bewegbar ist,
**dadurch gekennzeichnet, daß** an dem den Anschlag (42; 44) tragenden Wagen (12; 16) ein Abweiser (54) angeordnet ist, der den Riegel (20) nach Überfahren des Anschlags in seiner Freigabestellung hält oder ihn bei Annäherung an den Anschlag in seine Freigabestellung bewegt, wenn der Vorschubwagen aus einer Stellung jenseits seiner Grenzstellung auf diese zu bewegt wird.

2. Werkstück-Vorschubwagen nach Anspruch 1 mit einem zwischen Unter- und Oberwagen angeordneten und beiden gegenüber relativbeweglichen Mittelwagen,
**dadurch gekennzeichnet, daß** das am Ober- und Unterwagen (12, 16) je ein Anschlag (42, 44) vorgesehen ist und der Mittelwagen (14) den Riegel (20) trägt, der in seiner Freigabestellung an beiden Anschlägen (42, 44) vorbeiläuft.

3. Werkstück-Vorschubwagen nach Anspruch 1 oder 2,
**dadurch gekennzeichnet, daß** ein die Rückstellkraft erzeugendes Rückstellelement (28) vorgesehen ist.

4. Werkstück-Vorschubwagen nach einem der Ansprüche 1 bis 3,
**gekennzeichnet durch** ein an dem den Riegel (20) tragenden Wagen (14) angeordnetes Widerlager (29), das die Riegelstellung des Riegels (20) bestimmt und gegen das das Rückstellelement (28) den Riegel (20) vorspannt.

5. Werkstück-Vorschubwagen nach einem der Ansprüche 1 bis 4,
**dadurch gekennzeichnet, daß** der Riegel (20) um eine zur Vorschubrichtung senkrechte Achse (32) schwenkbar ist.

6. Werkstück-Vorschubwagen nach einem der Ansprüche 1 bis 5,
**dadurch gekennzeichnet, daß** das Betätigungsorgan (26) eine in Vorschubrichtung längsgeführte Stange (24) und eine Koppel (22) aufweist, die an ihrem einen Ende an dem Riegel (20) außerhalb dessen Schwenkachse und mit ihrem anderen Ende an einem Ende der Stange (24) angelenkt ist.

7. Werkstück-Vorschubwagen nach Anspruch 6,
**dadurch gekennzeichnet, daß** das Rückstellelement (28) eine die Stange (24) umgebende und sich einerseits an dieser, andererseits am Wagen (12; 14; 16) abstützende Druckfeder ist, welche mittels der Stange (24) den Riegel (20) an das Widerlager (29) zieht.

8. Werkstück-Vorschubwagen nach Anspruch 6 oder 7,
**dadurch gekennzeichnet, daß** die Schwenkachse (32) des Riegels (20), die dazu parallele Anlenkachse der Koppel (22) und der Anschlag bzw. die Anschläge (42, 44) derart relativ zueinander angeordnet sind, daß es beim Anliegen des Riegels (20) am Anschlag bzw. den Anschlägen (42, 44) in der Grenzstellung des Oberwagens (16) einer gegenläufigen Bewegung des Oberwagens bedarf, um den Riegel (20) aus der Riegelstellung in die Freigabestellung zu schwenken.

9. Werkstück-Vorschubwagen nach einem der Ansprüche 1 bis 8,
**dadurch gekennzeichnet, daß** der Abweiser (54) im Anschluß an den Anschlag in den jenseits der Grenzstellung liegenden Bereich ragt.

10. Werkstück-Vorschubwagen nach einem der Ansprüche 1 bis 9,
**gekennzeichnet durch** einen in Verbindung mit dem Schwenken des Riegels (20) in seine Freigabestellung betätigten Schalter, der den Stromkreis für den Werkzeugantrieb unterbricht.

## Claims

1. A workpiece-feed carriage of a machine tool, in particular of a circular saw, which has a stationary lower carriage and an upper carriage which is linearly movable relative thereto, whereof one of the two carriages has a stop and the respectively other carriage has a locking bar cooperating with the stop, the locking bar being movable by means of an actuating member in opposition to a restoring force out of a locking position, which limits the relative movement of the carriages to a limit position by means of said locking bar abutting against the stop, into a release position which allows it to run past the stop, characterized in that, arranged on the carriage (12; 16) carrying the stop (42; 44), there is a guide plate (54) which holds the locking bar (20) in its release position after the stop has been passed or, if the feed carriage is to be moved out of a position which is beyond its limit position towards the latter, moves the locking bar into its release position when the stop is approached.

2. A workpiece-feed carriage according to Claim 1, having a centre carriage which is arranged between the lower carriage and the upper carriage and is movable relative to both, characterized in that a stop (42, 44) is provided on the upper carriage (12) and lower carriage (16) respectively, and the centre carriage (14) carries the locking bar (20) which runs past the two stops (42, 44) in its release position

3. A workpiece-feed carriage according to Claim 1 or 2, characterized in that a restoring element (28) generating the restoring force is provided.

4. A workpiece-feed carriage according to one of Claims 1 to 3, characterized by an abutment (29) which is arranged on the carriage (14) carrying the locking bar (20), determines the locking position of the locking bar (20) and against which the restoring element (28) pretensions the locking bar (20).

5. A workpiece-feed carriage according to one of Claims 1 to 4, characterized in that the locking bar (20) is pivotable about an axis (32) perpendicular to the feed direction.

6. A workpiece-feed carriage according to one of Claims 1 to 5, characterized in that the actuating member (26) has a rod (24), which is longitudinally guided in the feed direction, and a connecting rod (22) which is coupled at its one end to the locking bar (20), outside the pivot axis of the latter, and is coupled by its other end to one end of the rod (24).

7. A workpiece-feed carriage according to Claim 6, characterized in that the restoring element (28) is a pressure spring which surrounds the rod (24), is supported at the one end thereon and at the other end on the carriage (12; 14; 16), and draws the locking bar (20) against the abutment (29) by means of the rod (24).

8. A workpiece-feed carriage according to Claim 6 or 7, characterized in that the pivot axis (32) of the locking bar (20), the coupling axis, parallel to said pivot axis, of the connecting rod (22) and the stop or stops (42, 44) are arranged relative to one another such that, when the locking bar (20) bears against the stop or stops (42, 44) in the limit position of the upper carriage (16), a movement of the upper carriage in the opposite direction is required in order to pivot the locking bar (20) out of the locking position into the release position.

9. A workpiece-feed carriage according to one of Claims 1 to 8, characterized in that the guide plate (54) adjoining the stop projects into the region located beyond the limit position.

10. A workpiece-feed carriage according to one of claims 1 to 9, characterized by a switch which is actuated in connection with the pivoting of the locking bar (20) into its release position and interrupts the electrical circuit for the tool drive.

## Revendications

1. Traînard pour pièces à usiner dans une machine-outil, en particulier une scie circulaire, lequel comprend un chariot inférieur fixe et un chariot supérieur pouvant se déplacer dans le sens linéaire par rapport à ce dernier, parmi lesquels l'un des deux chariots est muni d'une butée et l'autre chariot d'un verrou agissant avec la butée, le verrou pouvant être déplacé par l'intermédiaire d'un organe de commande, à l'encontre d'une force de rappel, d'une position de verrouillage, dans laquelle le mouvement relatif du chariot est arrêté dans une position limite définie par le contact avec la butée, vers une position d'ouverture, dans laquelle le chariot peut passer devant la butée,
caractérisé en ce qu'un butoir (54) est monté contre le chariot (12 ; 16) muni de la butée (42 ; 44), lequel butoir maintient le verrou (20) dans sa position d'ouverture après le passage devant la butée ou le déplace dans la position d'ouverture à l'approche de la butée, lorsque le traînard quitte une position de l'autre côté de sa position limite pour se déplacer vers cette dernière.

2. Traînard pour pièces à usiner selon la revendication 1, comprenant un chariot central disposé entre le chariot inférieur et le chariot supérieur et pouvant se déplacer par rapport à ces derniers, caractérisé en ce qu'une butée (42, 44) est prévue respectivement sur le chariot supérieur et inférieur (12, 16) et le chariot central (14) porte le verrou (20), qui dans sa position d'ouverture passe devant les deux butées (42, 44).

3. Traînard pour pièces à usiner selon la revendication 1 ou 2, caractérisé en ce qu'il est prévu un élément de rappel (28) exerçant la force de rappel.

4. Traînard pour pièces à usiner selon l'une quelconque des revendications 1 à 3, caractérisé en ce qu'un contrefort (29) est monté contre le chariot (14) qui porte le verrou (20), lequel contrefort définit la position de verrouillage du verrou (20) et à l'encontre duquel l'élément de rappel (28) précontraint le verrou (20).

5. Traînard pour pièces à usiner selon l'une quelconque des revendications 1 à 4, caractérisé en ce que le verrou (20) peut pivoter autour d'un axe (32) perpendiculaire au sens de l'avance.

6. Traînard pour pièces à usiner selon l'une quelconque des revendications 1 à 5, caractérisé en ce que l'organe de commande (26) comporte une tige (24) guidée longitudinalement dans le sens de l'avance et une bielle (22), dont l'une des extrémités est articulée contre le verrou (20), en dehors de l'axe de pivotement de celui-ci, et dont l'autre extrémité est articulée contre une extrémité de la tige (24).

7. Traînard pour pièces à usiner selon la revendication 6, caractérisé en ce que l'élément de rappel (28) est un ressort de pression qui entoure la tige (24) et s'appuie, d'une part, contre celle-ci et, d'autre part, contre le chariot (12 ; 14 ; 16), lequel ressort de pression tire le verrou (20) contre le contrefort (29) à l'aide de la tige (24).

8. Traînard pour pièces à usiner selon la revendication 6 ou 7, caractérisé en ce que l'axe de pivotement (32) du verrou (20), l'axe d'articulation de la bielle (22), parallèle à ce dernier, et la butée ou les butées (42, 44) sont disposés l'un par rapport à l'autre de telle sorte que, lorsque le verrou (20) entre en contact avec la butée ou les butées (42, 44) dans la position limite du chariot supérieur (16), le chariot supérieur doit exécuter un mouvement opposé pour faire pivoter le verrou (20) hors de la position de verrouillage vers la position d'ouverture.

9. Traînard pour pièces à usiner selon l'une quelconque des revendications 1 à 8, caractérisé en ce que le butoir (54) s'avance en saillie en prolongement de la butée dans la zone située de l'autre côté de la position limite.

10. Traînard pour pièces à usiner selon l'une quelconque des revendications 1 à 9, caractérisé par un interrupteur, actionné en fonction du pivotement du verrou (20) vers sa position d'ouverture, lequel interrupteur coupe le circuit électrique assurant l'entraînement de l'outil.
